# FASCICULE DE BREVET EUROPEEN

(11) **EP 3 458 300 B1**
(45) Date de publication et mention de la délivrance du brevet: **25.11.2020**
(21) Numéro de dépôt: 17725711.0
(22) Date de dépôt: 03.05.2017
(51) Int. Cl.: B60K 37/00, B60K 37/04, B62D 25/14, B60R 7/06, B60R 13/02, B60R 11/02, B60R 11/00

(54) **AGENCEMENT DE PLANCHE DE BORD COTE PASSAGER AVANT COMPORTANT UN CHASSIS SUPPORT POUR BOITIERS ELECTRONIQUES**
ARMATURENBRETTANORDNUNG AUF DER BEIFAHRERSEITE MIT EINEM HALTERAHMEN FÜR ELEKTRONISCHE EINHEITEN
FRONT PASSENGER-SIDE DASHBOARD ARRANGEMENT HAVING A SUPPORT FRAME FOR ELECTRONIC UNITS

(30) Priorité: 19.05.2016 FR 1654471
(43) Date de publication de la demande: 27.03.2019
(73) Titulaire: PSA Automobiles SA, 78300 Poissy (FR)
(72) Inventeur: THIEBAULT, Ludovic, 70400 Couthenans (FR)
(86) Numéro de dépôt international: PCT/FR2017/051058
(87) Numéro de publication internationale: WO 2017/198925

(56) Documents cités:
- WO-A1-2014/191643
- DE-T2- 69 812 543
- US-A1- 2009 284 038
- US-A1- 2010 295 285

## Description

### Domaine de l'invention

La présente invention concerne d'une manière générale les agencements de planche de bord de véhicules automobiles au niveau du passager avant.

### Arrière-plan de l'invention

Une planche de bord pour véhicule automobile comporte classiquement au niveau du passager avant une partie supérieure et une partie inférieure comprenant un dispositif de rangement de type boîte à gants constitué par un bac de rangement fermé par une porte articulée à pivotement au niveau du bord inférieur avant de ce bac.

Certains types de planches comprennent dans leur partie supérieure un fronton de fixation surplombant la portion avant du dispositif de rangement et qui est arrimé sur une traverse tubulaire rigide implantée à l'arrière de ce dernier.

Cette partie supérieure comprend également traditionnellement des conduits de distribution d'air ventilé ou climatisé ainsi qu'un coussin gonflable de sécurité (communément désigné sous le terme « airbag ») implanté à l'arrière du fronton de fixation au dessus de la traverse tubulaire à laquelle il est fixé par l'intermédiaire d'au moins une patte de fixation.

Ces planches de bord sont généralement livrées assemblées par l'équipementier sous-traitant au constructeur automobile qui, préalablement à son intégration sur la structure du véhicule, se charge sur la ligne de montage de rapporter en façade du fronton une bande décorative ainsi que divers éléments additionnels (montre, écran d'affichage, buses d'aération, etc...) variant en fonction de la version du modèle de véhicule et de son niveau de finition. Le document US7926845 décrit une planche de bord pour un véhicule, comprenant un dispositif de direction; une traverse supportant le dispositif de direction; un support comprenant une base fixée à la traverse, une partie d' extension se prolongeant à l'avant du véhicule depuis la base, une section de support incurvée vers une partie supérieure du véhicule à une partie avant de la partie d' extension et un dispositif supporté par la section de support et fixé à la traverse par l'intermédiaire du support. Le document US8181991 décrit une planche de bord comprenant un élément allongé fixé à une partie du véhicule et se prolongeant vers l'ensemble de panneau d'instruments, un panneau inférieur espacé de l'élément allongé, au moins une attache disposée sur une ou l'autre du panneau inférieur ou l'élément allongé. Le document WO2014191643 une infrastructure comprenant une barre, de type traverse, qui est pourvue d'une bride de fixation conçue pour fixer ladite barre à la carrosserie du véhicule, un boîtier de sécurité, destiné à contenir un coussin gonflable de protection contre les chocs de type sac gonflable. Le document DE69812543 décrit un panneau de commande central (P) et des composants de commande des accessoires. Les composants de commande sont stockés dans une partie d'ouverture d'un tableau de bord, et la partie d'ouverture est recouverte par le panneau de commande central (P).

S'il permet ainsi d'apporter une certaine diversité de style particulièrement appréciable, ce type d'agencement de planche de bord présente toutefois l'inconvénient de générer, à l'arrière du fronton de fixation et au dessus de la traverse tubulaire, un espace vacant inexploitable par le constructeur automobile car non accessible sur la ligne de montage du véhicule.

### Objet et résumé de l'invention

La présente invention vise donc à permettre d'exploiter au moins partiellement ce volume vacant sur la ligne de montage d'un véhicule automobile.

Elle propose à cet effet, un agencement de planche de bord pour véhicule automobile comportant au niveau du passager avant une partie inférieure comprenant un dispositif de rangement ainsi qu'une partie supérieure comprenant un fronton de fixation destiné à recevoir en façade une bande décorative, ledit fronton surplombant la portion avant dudit dispositif de rangement et étant arrimé sur une traverse rigide implantée à l'arrière de ce dernier ;

ladite partie supérieure comportant en outre un châssis support pour au moins un boîtier électronique, ledit châssis support traversant ledit fronton de fixation au niveau d'une ouverture ménagée dans ladite façade et s'étendant à l'arrière de ce dernier au-dessus de ladite traverse rigide, et ledit châssis support étant constitué par un tiroir parallélépipédique formé par une paroi avant, une paroi arrière, deux parois latérales et une paroi de fond sur laquelle ledit au moins un boîtier électronique est fixé de manière amovible.

L'invention permet au constructeur automobile, préalablement à la mise en place de la bande décorative sur la façade du fronton de fixation, de pouvoir exploiter l'espace vacant à l'arrière du fronton de fixation et au dessus de la traverse tubulaire pour y implanter des boîtiers électroniques assurant le pilotage de fonctions optionnelles présentes uniquement sur certaines versions d'un même modèle de véhicule, telles que par exemple l'assistance à la vision de nuit ou l'éclairage d'ambiance de l'habitacle.

Selon des caractéristiques préférées de l'invention, prises seules ou en combinaison :
- la partie arrière dudit châssis support repose sur ladite traverse rigide ;
- ledit agencement de planche de bord comporte en outre un coussin gonflable de sécurité implanté à l'arrière dudit fronton de fixation au dessus dudit châssis support et de ladite traverse rigide à laquelle il est arrimé par l'intermédiaire d'une languette fixée sur un pied de fixation solidaire de cette traverse rigide ;
- ledit châssis support présente en partie arrière une encoche traversée par ledit pied de fixation ;
- ledit tiroir est ouvert vers le bas de sorte que le au moins dit boîtier électronique soit situé en regard dudit dispositif de rangement ;
- ladite paroi avant du tiroir se prolonge latéralement au delà des deux dites parois latérales par deux ailettes munies chacune d'un perçage respectif, de sorte à permettre la fixation par vissage dudit tiroir sur ladite façade du fronton ;
- ledit tiroir comporte des moyens de guidage aptes à assurer un positionnement adéquat et un pré-maintien de ce dernier ;
- lesdits moyens de guidage comportent deux tiges à bout pointu saillant transversalement vers l'arrière depuis les deux dites ailettes et venant s'insérer au travers de deux orifices ménagés dans ladite façade du fronton ; et/ou
- lesdits moyens de guidage comportent une tige à bout pointu saillant transversalement vers l'arrière depuis ladite paroi arrière du tiroir et venant s'insérer au travers d'un orifice ménagé dans une patte fixée à ladite traverse rigide.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :
- la figure 1 est une vue en coupe d'un agencement de planche de bord de véhicule automobile selon l'invention ;
- la figure 2 est une vue en perspective du châssis support pour boîtiers électroniques que comporte l'agencement de planche de bord de la figure 1 ;
- les figures 3 et 4 sont des vues en coupe illustrant deux étapes de montage dudit châssis support à l'intérieur de la planche de bord ; et
- la figure 5 est une vue de face de la planche de bord après la mise ne place dudit châssis support.

### Description détaillée d'un mode de réalisation

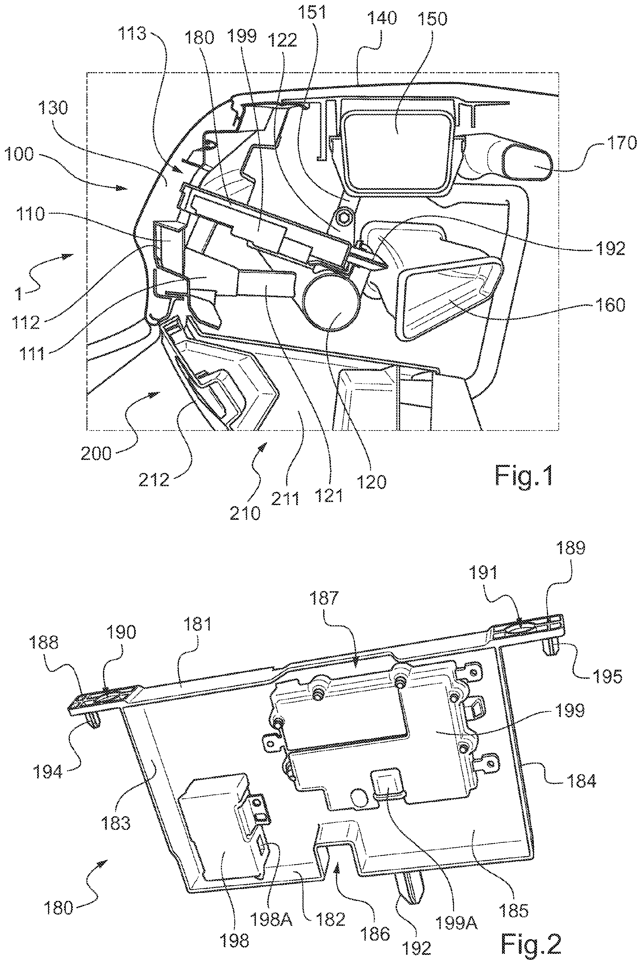

La figure 1 représente un agencement de planche de bord selon l'invention dans sa configuration entièrement assemblée avant son montage sur la structure d'un véhicule automobile.

Dans la description qui va suivre et par convention, les termes les termes « avant », « arrière », « haut », « bas », « longitudinal » et « transversal » seront définis par rapport à la position de cette planche de bord 1 une fois montée sur la structure du véhicule.

La planche de bord 1 comporte, au niveau du passager avant et de façon connue, une partie supérieure 100 et une partie inférieure 200 comprenant un dispositif de rangement 210 de type boîte à gants constitué par un bac de rangement en matière plastique 211 fermé par une porte 212 articulée à pivotement au niveau du bord inférieur avant de ce bac 211.

La partie supérieure 100 de la planche de bord 1 comporte quant à elle un fronton de fixation en matière plastique 110 surplombant la portion avant du bac de rangement 210 et étant arrimé à une traverse métallique tubulaire rigide 120 implantée à l'arrière de ce dernier par l'intermédiaire d'au moins un fût de fixation 111 vissé sur une patte métallique 121 solidaire de cette traverse 120.

Ce fronton de fixation 110 comprend une façade sensiblement verticale 112 contre la face avant de laquelle est fixée une bande décorative 130 en matière plastique dont le bord inférieur est sensiblement adjacent avec le bord supérieur de la porte 212 du dispositif de rangement 210.

La partie supérieure 100 comporte également une paroi de couverture 140, un coussin gonflable de sécurité 150, ainsi que deux conduits de distribution d'air 160, 170 reliés au système de ventilation/climatisation du véhicule.

La paroi de couverture 140 dont le bord avant est sensiblement adjacent avec le bord supérieur de la bande décorative 130, présente une face externe destinée à faire face au pare-brise après l'intégration de la planche de bord 1 sur la structure du véhicule.

Le coussin gonflable de sécurité 150 (communément désigné sous le terme « airbag ») est implanté à l'arrière du fronton de fixation 110 juste en dessous de la paroi de couverture 140 et au dessus de la traverse tubulaire 120 à laquelle il est arrimé par l'intermédiaire d'une languette 151 vissée sur un pied de fixation vertical 122 soudé à cette traverse 120.

Implanté en dessous du coussin gonflable 150 et derrière la traverse tubulaire rigide 120, le conduit de distribution 160 permet de distribuer de l'air ventilé ou climatisé vers une buse d'aération (non visible sur les figures) orientée en direction du passager avant et adjacente des bords latéraux extérieurs du fronton de fixation 110 et de la bande décorative 130.

Le conduit de distribution 170 s'étend à l'arrière du coussin gonflable 150 puis le long de son côté latéral externe pour venir déboucher sur une buse d'aération (non visible) ménagée dans la paroi de couverture 140 afin d'assurer le désembuage du pare-brise.

Selon l'invention, la partie supérieure 100 de la planche de bord 1 comporte en outre un châssis support 180 traversant le fronton de fixation 110 au niveau d'une ouverture 113 ménagée dans sa façade verticale 112, ce châssis 180 s'étendant à l'arrière de ce dernier au dessus de la traverse tubulaire rigide 120 et en dessous du coussin gonflable 150.

Le châssis support 180 montré seul sur la figure 2 se présente sous la forme d'un tiroir parallélépipédique en matière plastique formé par une paroi avant 181, une paroi arrière 182, deux parois latérales 183, 184 et une paroi de fond 185.

Le tiroir 180 loge deux boîtiers électroniques 198, 199 fixés par vissage sur la paroi de fond 185 et assurant le pilotage de fonctions optionnelles disponibles uniquement sur certaines versions d'un même modèle de véhicule, telles que par exemple l'assistance à la vision de nuit ou l'éclairage d'ambiance de l'habitacle.

Comme illustré sur la figure 1, ce tiroir 180 est ouvert vers le bas de sorte que les boîtiers électroniques 198, 199 soient situés en regard du dispositif de rangement 210.

Sa partie arrière repose sur la traverse rigide 120 et présente une encoche parallélépipédique 186 traversée par le pied de fixation vertical 122.

Une découpe 187 formant poignée de préhension est en outre ménagée sur sa paroi avant 181 afin de faciliter sa mise en place par un opérateur sur la ligne de montage.

La paroi avant 181 se prolonge latéralement au delà des deux parois latérales 183, 184 par deux ailettes de fixation 188, 189 munies chacune d'un perçage respectif 190, 191 de sorte à permettre la fixation par vissage du tiroir 180 sur la façade 112 du fronton 110 grâce à deux vis non représentées.

Des moyens de guidage sont en outre prévus afin d'assurer un positionnement adéquat et un pré-maintien du tiroir 180 avant sa fixation par vissage sur la façade 112 du fronton 110.

Ces derniers comportent une tige à section en croix et à bout pointu 192 saillant transversalement vers l'arrière depuis la paroi arrière 182 du tiroir 180 et venant s'insérer au travers d'un orifice 125 ménagé dans une patte 124 soudée sur la traverse tubulaire rigide 120.

Les moyens de guidage comprennent également deux autres tiges 193, 194, semblables à la tige 192 mais de plus petites dimensions, saillant transversalement vers l'arrière depuis les deux ailettes de fixation 188, 189 et venant s'insérer au travers de deux orifices ménagés dans la façade 112 du fronton 110 (non visibles sur les figures).

De manière avantageuse, les tiges de guidage 192, 194, 195 sont venues de moulage d'une seule pièce avec le tiroir 180 à partir d'un matériau thermoplastique.

Afin de mieux préciser l'intérêt de l'invention, on va maintenant décrire les étapes finales d'assemblage de la planche de bord 1 réalisées chez le constructeur automobile sur la ligne de montage du véhicule.

Comme déjà indiqué ci-avant, la planche de bord 1 est livrée déjà assemblée par l'équipementier sous-traitant au constructeur automobile, à l'exception notable de la bande décorative 130 et du support de boîtiers électroniques 180 dont l'implémentation est assurée sur la ligne de montage avant son intégration à la structure du véhicule.

Dans un premier temps, l'opérateur en charge de ces opérations insère l'une de ses mains au travers de l'ouverture 113 ménagée dans la façade 112 du fronton 110 pour venir agripper les deux connectiques d'extrémités des faisceaux électriques (non représentés sur les figures) chargés d'alimenter les deux boîtiers électroniques 198, 199.

Il les extrait ensuite de cette planche de bord 1 par cette même ouverture 113 puis amène le tiroir 180 à proximité de cette dernière et réalise le branchement des connectiques des deux faisceaux sur les ports d'alimentation 198A, 199A des boîtiers électroniques 198, 199.

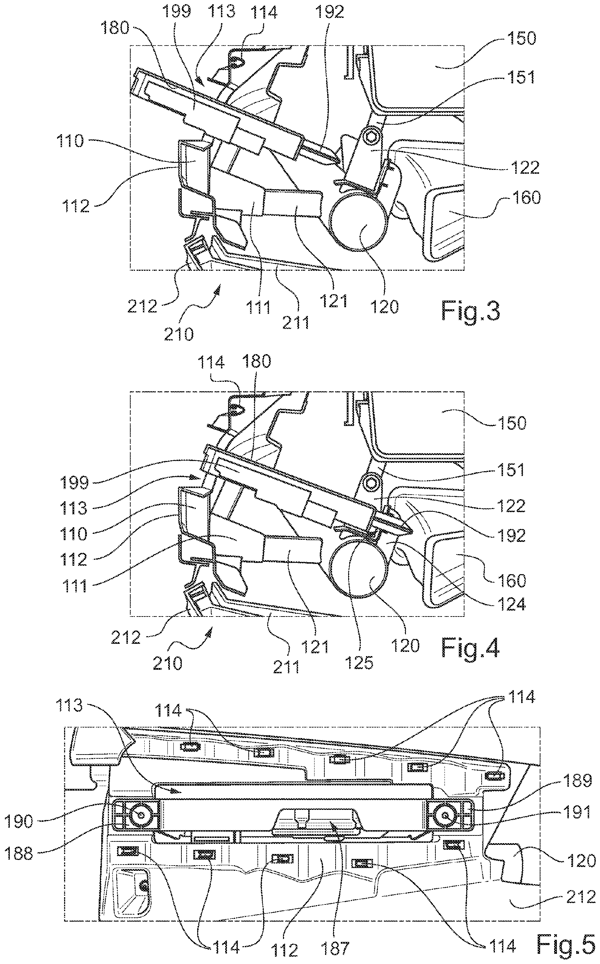

L'opérateur présente alors l'extrémité arrière du tiroir 180 ouvert vers le bas en regard de l'ouverture 113, puis l'introduit progressivement au travers de cette dernière (figure 3) de sorte que la tige de guidage 192 et le pied de fixation vertical 122 pénètrent respectivement dans l'orifice 125 de la patte 124 et dans l'encoche parallélépipédique 186, puis que les tiges de guidage 193, 194 s'insèrent dans les orifices correspondants ménagés dans la façade du fronton 110 (figures 4 et 5).

On remarquera que l'opérateur est assisté dans sa tâche par le fût de fixation 111, la patte métallique 121 et la traverse 120 le long desquels le tiroir 180 peut glisser et qui l'empêchent également de tomber en dessous de cette traverse 120.

Il ne reste plus désormais qu'à procéder au vissage de deux vis au travers des perçages 190, 191 pratiqués dans les deux ailettes 188, 189 pour assurer la fixation définitive du tiroir 180 au fronton 110.

Une fois le tiroir 180 mis en place, l'opérateur peut alors venir rapporter la bande décorative 130 contre la façade 112 du fronton 110 à l'aide d'une pluralité d'agrafes de fixation 114 disposées en périphérie de l'ouverture 113 et coopérant par encliquetage avec des pions implantés sur la face arrière de cette bande 130 et non visibles sur les figures.

D'autres éléments additionnels non représentés (montre, écran d'affichage, buses d'aération, etc...) sont montés ensuite sur cette bande décorative ou à proximité de cette dernière avant que la planche de bord 1 soit intégrée à la structure du véhicule.

L'ouverture vers le bas du tiroir 180 permet en après-vente d'accéder aux boîtiers électroniques 198, 199 par-dessous en démontant seulement au préalable le dispositif de rangement 210. Si nécessaire, ces boîtiers peuvent alors être désolidarisés de la paroi de fond du tiroir 180 (en retirant les vis de fixation aisément accessibles) puis extraits de la planche de bord 1 pour être réparés, reprogrammés ou changés.

Cet accès par-dessous plutôt que par l'avant permet un gain de temps considérable en évitant le démontage de la bande décorative, des divers éléments additionnels rapportés ainsi que celle du tiroir 180.

Selon des variantes de réalisation non représentées, le châssis support 180 se présente sous une forme différente d'un tiroir et peut par exemple être constitué par une boîte fermée.

Selon encore d'autres variantes de réalisation, les moyens de guidage sont également différents de ceux décrits ci-avants.

## Revendications

1. Agencement de planche de bord pour véhicule automobile comportant au niveau du passager avant une partie inférieure (200) comprenant un dispositif de rangement (210) ainsi qu'une partie supérieure (100) comprenant un fronton de fixation (110) destiné à recevoir en façade (112) une bande décorative (130), ledit fronton (110) surplombant la portion avant dudit dispositif de rangement (210) et étant arrimé sur une traverse rigide (120) implantée à l'arrière de ce dernier, ladite partie supérieure (100) comportant en outre un châssis support (180) pour au moins un boîtier électronique (198, 199), ledit châssis support (180) traversant ledit fronton de fixation (110) au niveau d'une ouverture (113) ménagée dans ladite façade (112) et s'étendant à l'arrière de ce dernier au dessus de ladite traverse rigide (120), et ledit châssis support étant constitué par un tiroir parallélépipédique (180) formé par une paroi avant (181), une paroi arrière (182), deux parois latérales (183, 184) et une paroi de fond (185) sur laquelle ledit au moins un boîtier électronique (198, 199) est fixé de manière amovible.

2. Agencement de planche de bord selon la revendication 1, **caractérisé en ce que** la partie arrière dudit châssis support (180) repose sur ladite traverse rigide (120).

3. Agencement de planche de bord selon l'une des revendications 1 ou 2, **caractérisé en ce qu'**il comporte en outre un coussin gonflable de sécurité (150) implanté à l'arrière dudit fronton de fixation (110) au dessus dudit châssis support (180) et de ladite traverse rigide (120) à laquelle il est arrimé par l'intermédiaire d'une languette (151) fixée sur un pied de fixation (122) solidaire de cette traverse rigide (120).

4. Agencement de planche de bord selon la revendication 3, **caractérisé en ce que** ledit châssis support (180) présente en partie arrière une encoche (186) traversée par ledit pied de fixation (122).

5. Agencement de planche de bord selon la revendication 4, **caractérisé en ce que** ledit tiroir (180) est ouvert vers le bas de sorte que le au moins dit boîtier électronique (198, 199) soit situé en regard dudit dispositif de rangement (210).

6. Agencement de planche de bord selon l'une des revendications 4 ou 5, **caractérisé en ce que** ladite paroi avant (181) du tiroir (180) se prolonge latéralement au delà des deux dites parois latérales (183, 184) par deux ailettes (188, 189) munies chacune d'un perçage respectif (190, 191), de sorte à permettre la fixation par vissage dudit tiroir (180) sur ladite façade (112) du fronton (110).

7. Agencement de planche de bord selon l'une des revendications 4 à 6, **caractérisé en ce que** ledit tiroir (180) comporte des moyens de guidage (192, 194, 195) aptes à assurer un positionnement adéquat et un pré-maintien de ce dernier.

8. Agencement de planche de bord selon les revendications 6 et 7, **caractérisé en ce que** lesdits moyens de guidage comportent deux tiges à bout pointu (194, 195) saillant transversalement vers l'arrière depuis les deux dites ailettes (188, 189) et venant s'insérer au travers de deux orifices ménagés dans ladite façade (112) du fronton (110).

9. Agencement de planche de bord selon l'une des revendications 7 ou 8, **caractérisé en ce que** lesdits moyens de guidage comportent une tige à bout pointu (192) saillant transversalement vers l'arrière depuis ladite paroi arrière (182) du tiroir (180) et venant s'insérer au travers d'un orifice (125) ménagé dans une patte (124) fixée à ladite traverse rigide (120).

## Patentansprüche

1. Armaturenbrettanordnung für ein Kraftfahrzeug mit einem unteren Teil (200), der eine Aufbewahrungseinrichtung (210) und einen oberen Teil (100) aufweist, der eine Befestigungsflansche (110) zur Aufnahme eines dekorativen Streifens (130) in der Fassade (112) aufweist Das Oberteil (100), das den vorderen Teil der Aufbewahrungsvorrichtung (210) überdeckt und an einem starren Querträger (120) befestigt ist, der hinter diesem angeordnet ist, umfasst ferner einen Stützrahmen (180) für mindestens ein elektronisches Gehäuse (198, 199), wobei der Stützrahmen (180) die Flansche durchsetzt Befestigungsvorrichtung (110) an einer Öffnung (113) in der Fassade (112), die sich nach hinten über der starren Traverse (120) erstreckt, und wobei das Trägergestell aus einem quaderförmigen Schieber (180) besteht, der durch eine Vorderwand (181), eine Rückwand (18) gebildet ist 82), zwei Seitenwände (183, 184) und eine Bodenwand (185), an der das mindestens eine Elektronikgehäuse (198, 199) lösbar befestigt ist.

2. Armaturenbrettanordnung nach Anspruch 1, **dadurch gekennzeichnet, dass** der hintere Teil des Traggestells (180) auf dem starren Querträger (120) aufliegt.

3. Armaturenbrettanordnung nach einem der Ansprüche 1 oder 2, **dadurch gekennzeichnet, dass** sie ferner einen Airbag (150) umfasst, der hinter der Befestigungsflanke (110) über dem Traggestell (180) und dem starren Querträger (120) angeordnet ist, an dem er über eine Zunge (150) befestigt ist 1) an einem Befestigungsfuß (122) befestigt ist, der fest mit diesem starren Querträger (120) verbunden ist.

4. Armaturenbrettanordnung nach Anspruch 3, **dadurch gekennzeichnet, dass** der Stützrahmen (180) im hinteren Teil eine Kerbe (186) aufweist, die von dem Befestigungsfuß (122) durchsetzt ist.

5. Armaturenbrettanordnung nach Anspruch 4, **dadurch gekennzeichnet, dass** der Schieber (180) nach unten offen ist, sodass das mindestens eine elektronische Gehäuse (198, 199) gegenüber der Aufbewahrungsvorrichtung (210) angeordnet ist.

6. Armaturenbrettanordnung nach einem der Ansprüche 4 oder 5, **dadurch gekennzeichnet, dass** die Vorderwand (181) des Schiebers (180) sich seitlich über die beiden Seitenwände (183, 184) hinaus durch zwei Rippen (188, 189) erstreckt, die jeweils mit einer entsprechenden Bohrung (190, 191) versehen sind (112) der Flansche (110) durch Verschraubung befestigt werden kann.

7. Armaturenbrettanordnung nach einem der Ansprüche 4 bis 6, **dadurch gekennzeichnet, dass** die Schublade (180) Führungsmittel (192, 194, 195) aufweist, die geeignet sind, eine angemessene Positionierung und eine Vorhaltung derselben zu gewährleisten.

8. Armaturenbrettanordnung nach den Ansprüchen 6 und 7, **dadurch gekennzeichnet, dass** die Führungsmittel zwei Spitzen-Stifte (194,195) aufweisen, die quer nach hinten von den beiden Rippen (188,189) vorstehen und durch zwei Öffnungen in der Fassade (112) der Flanke (110) hineinragen .

9. Armaturenbrettanordnung nach einem der Ansprüche 7 oder 8, **dadurch gekennzeichnet, dass** die Führungsmittel einen spitzen Schaft (192) aufweisen, der quer nach hinten von der Rückwand (182) des Schiebers (180) vorsteht und durch eine Öffnung (125) in einem an dem Schieber befestigten Lappen (124) eingeführt wird Starres Querelement (120).

## Claims

1. Motor vehicle dashboard arrangement having at the front passenger level a lower part (200) comprising a storage device (210) and a higher part (100) comprising a fixing pediment (110) intended to receive at the front (112) a decorative strip (130), the said fronton (110) overhanging the front portion of the said storage device (210) and being secured to a rigid cross (120) implanted on the rear of the storage device, the said upper part (100) also having a supporting chassis (180) for at least one electronic enclosure (198, 1999), the said supporting chassis (180) crossing the said chassis fastening rod (110) at an opening (113) in the said facade (112) and extending to the back of the latter above the said rigid cross (120), and the said supporting frame being made up of a parallel drawer (180) formed by a front wall (181), a rear wall (182), two side walls (183, 184) and one bottom wall (185) on which at least one electronic enclosure (198, 199) is attached remotely.

2. Dashboard arrangement according to Claim 1, characterized as the rear part of the said support frame (180) rests on the said rigid cross-head (120).

3. Arrangement of dashboard according to one of the claims 1 or 2, **characterized in** addition by a safety airbag (150) implanted at the rear of the said fixing pediment (110) above the said supporting chassis (180) and the said rigid cross (120) to which it is secured by means of a tab (110) 51) fixed on a fastening foot (122) in solidarity with this rigid cross (120).

4. Arrangement of dashboard according to claim 3, characterized as the said supporting chassis (180) has a notch (186) crossed by the said fixing foot (122) in the rear part.

5. Arrangement of dashboard according to Claim 4, characterized as the said drawer (180) is open downward so that at least the said electronic box (198, 199) is located next to the said storage device (210).

6. Dashboard arrangement according to one of the claims 4 or 5, **characterized by** the fact that the front wall (181) of the drawer (180) extends laterally beyond the two said lateral walls (183,184) by two wings (188,189) each with a respective piercing (190,191), so as to allow the fastening by screw of the said drawer (180) on the said facade (112) of the fronton (110).

7. Instrument panel arrangement according to one of the claims 4 to 6, **characterized by** the fact that the drawer (180) has guidance (192, 194, 195) capable of ensuring proper positioning and pre-maintenance of the drawer.

8. Dashboard arrangement according to claims 6 and 7, characterized that the said means of guidance include two pointed-end rods (194, 195) which protrude outwards from the two so-called wings (188, 189) and insert through two holes in the said facade (112) of the pediment (110).

9. Arrangement of dashboard according to one of the claims 7 or 8, characterized that the said means of guidance include a pointed-end rod (192) which sits vertically from the said rear wall (182) of the drawer (180) and which is inserted through an opening (125) in a fixed tab (124) to the said rigid cross (120).
